# EUROPÄISCHE PATENTSCHRIFT

(11) **EP 1 587 719 B1**
(45) Veröffentlichungstag und Bekanntmachung des Hinweises auf die Patenterteilung: **21.03.2007**
(21) Anmeldenummer: 04706183.3
(22) Anmeldetag: 29.01.2004
(51) Int. Cl.: B60R 21/20

(54) **INNENVERKLEIDUNGSTEIL**
INTERIOR TRIMMING PIECE
ELEMENT DE GARNITURE INTERIEURE

(30) Priorität: 29.01.2003 DE 10304197
(43) Veröffentlichungstag der Anmeldung: 26.10.2005
(73) Patentinhaber: Faurecia Innenraum Systeme GmbH, 31224 Peine (DE)
(72) Erfinder: BRANDSTÄTTER, Albert, 85235 Odelzhausen (DE)
(74) Vertreter: Pfenning, Meinig & Partner GbR
(86) Internationale Anmeldenummer: PCT/EP2004/000802
(87) Internationale Veröffentlichungsnummer: WO 2004/067334

(56) Entgegenhaltungen:
- US-A- 5 564 733
- US-A- 5 810 388
- US-A- 6 070 901
- US-A1- 2002 125 689
- US-B1- 6 322 101
- US-B1- 6 402 189

## Beschreibung

Die vorliegende Erfindung betrifft ein Innenverkleidungsteil nach dem Oberbegriff des Patentanspruchs 1.

Für solche Innenverkleidungsteile stellt sich insbesondere bei modernen Kraftfahrzeugen die Aufgabe, nicht nur leichtbauend und umweltfreundlich zu sein, sondern auch Durchtrittmöglichkeiten für hinter dem Innenverkleidungsteil angeordnete Airbagmodule bereitzustellen.

So ist ein gattungsgemäßes Innenverkleidungsteil für Kraftfahrzeuge bekannt, welches einen Kunststoffträger sowie ein damit verbundenes, mit einem Scharnierblatt zur zumindest bereichsweisen Überbrückung eines Airbagdurchgangskanals versehenes Metallverstärkungsteil aufweist. Dieses Metallverstärkungsteil ist z.B. ein an den Kunststoffträger angenietetes Blechteil, welches eine definierte Knickkante aufweist, so dass im Fall einer Airbagauslösung diese Knickkante als Scharnier einer Airbagklappe dient, während der Kunststoffträger im Bereich des Airbagdurchgangskanals aufgerissen wird.

Das Metallteil hat hierbei außerdem die Aufgabe, im Normalbetrieb des Fahrzeuges eine steife Überbrückung des Airbagdurchgangskanals bereitzustellen.

Nachteile bekannter Innenverkleidungsteile liegen jedoch oft in der kontrollierten Scharnierung der Klappe, also der Öffnung des Airbagdurchgangskanals beim Auslösen eines Airbags. Hier ist es zum einen sinnvoll, den Öffnungswinkel der Klappe zumindest grob zu steuern, außerdem sollte ein sehr fester Halt zwischen Kunststoffträger und Metallverstärkungsteil bestehen, so dass keine Metallteile eventuell ungewollt in den Fahrzeuginnenraum dringen können.

Hierzu muss eine ausreichende Festigkeit der Bindung zwischen Metallverstärkungsteil und Kunststoffträger gegeben sein, um die hochdynamischen Kräfte beim Airbagschuss ohne ungewollte Verformung bzw. Brüche des Kunststoffträgers zu bewerkstelligen. So ist z.B. auch das Ausbilden eines "Bauches" bei ungenügend steifen Konstruktionen ein gravierender Nachteil.

Andererseits soll nicht durch eine zu steife Auslegung z.B. des Kunststoffträgers, welcher außerdem in der Konstruktion sehr kostenaufwendig sein kann und gewichtsintensiv ist, ein unsicheres Ergebnis beim "Kopfaufschlagstest", auf die Instrumententafel gegeben sein. Das heißt, dass eine ausreichende Elastizität des Innenverkleidungsteils/der Instrumententafel gegeben sein muss, um bei einem Aufprall von Insassen auf die Instrumententafel keine schwerwiegenden Verletzungen hervorzurufen.

Nachteilig an sämtlichen im Stand der Technik bekannten gattungsgemäßen Innenverkleidungsteilen ist auch, dass eine Anbindung des Kunststoffträgers an das Metallverstärkungsteil sichtbar ist, da insbesondere z.B. nach intensiver Sonnenbestrahlung sich Aufwölbungen bzw. Nietköpfe durch eine zum Kraftfahrzeuginnenraum hin abschließende Dekorschicht abzeichnen.

Das wird verbessert beilspielsweise dadurch, dass bei einem gattungsgemäßen Innenverkleidungsteil das Metallverstärkungsteil einen Befestigungsrahmen für ein Airbagmodul aufweist, welcher einteilig mit dem Scharnierblatt über einen Scharniersteg verbunden ist.

Ein derartiges Innevertleidungsteil ist z.B. aus der US-A-6 070 901 bekannt.

Es ist daher die Aufgabe der vorliegenden Erfindung, Innenverkleidungsteile für Kraftfahrzeuge zu schaffen, welche einerseits kostengünstig in der Herstellung sind und andererseits unsichtbare Airbagdurchgangsöffnungen aufweisen, sowie insbesondere bei hoher Stabilität eine ausreichende Verformbarkeit aufweisen, um bei einem "Kopfaufschlagstest" gute Ergebnisse zu erreichen.

Diese Aufgabe wird durch ein Innenverkleidungsteil nach Anspruch 1 gelöst.

Das Metallverstärkungsteil ist fest mit dem Kunststoffträger verbunden über einen Befestigungsrahmen. Dieser Befestigungsrahmen, welcher das Scharnierblatt vorzugsweise in einer Ebene vollständig umgibt (hierdurch ist die Herstellung besonders einfach, weil das Scharnierblatt aus einem Metallblech lediglich bereichsweise ausgeschnitten bzw. ausgestanzt werden muss) weist bereits eine hohe Eigenstabilität auf. Außerdem ist eine kostengünstige Herstellung dieses Metallverstärkungsteiles möglich, weil es einfach einteilig und damit kostengünstig hergestellt werden kann. Das Metallverstärkungsteil enthält also integral den Befestigungsrahmen, das Scharnierblatt und (beide verbindend) den Scharniersteg, welcher später die "Knickkante" des Scharniers bilden wird bei einer Airbagauslösung.

Eine besonders vorteilhaft Charakteristik sieht vor, dass mindestens eine, den Kunststoffträger zumindest bereichsweise hintergreifende Brücke vorgesehen ist zur Fixierung des Befestigungsrahmens am Kunststoffträger. Diese Brücke ermöglicht es, dass eine besonders feste Halterung zwischen Kunststoffrahmen und Befestigungsrahmen gegeben ist. Selbst im Falle einer Airbagauslösung bei sehr niedrigen Temperaturen stellt diese hintergreifende Brücke sicher, dass kein Ausreißen des Befestigungsrahmens entgegen der Auslöserichtung des Airbags stattfindet, so dass auch aus diesem Grunde die Abstützung auf einem Querträger bzw. Extra-Tragrohr unnötig ist. Die Brücke kann hierbei aus beliebigen Materialien gearbeitet sein, z.B. aus Stahlblech, aber auch Aluminiumdruckguss oder aus einem Kunststoff, welcher ausreichend zugfest ist.

Als eine vorteilhafte Eigenschaft ist vorgesehen, dass der Kunststoffträger den Airbagdurchgangskanal voll überdeckt. Hierdurch wird gewährleistet, dass im Normalzustand ein weitreichender Schutz des darunter liegenden Airbagmoduls gewährleistet ist. Hierbei kann der Kunststoffträger um den Airbagdurchtrittskanal herum eine Sollbruchlinie (vorzugsweise unterhalb der von den Fahrzeuginsassen sichtbaren Dekorschicht, z.B. auf der Rückseite des Kunststoffträgers) aufweisen, um eine Unsichtbarkeit des Airbagdurchgangskanals zu garantieren. Hierzu bietet es sich außerdem an, dass das Scharnierblatt des Metallverstärkungsteils auf der dem Kraftfahrzeug-Innenraum abgewandten Seite des Kunststoffträgers aufgebracht ist.

Es ist nun besonders vorteilhaft, dass ein Airbagmodul direkt an diesem Befestigungsrahmen befestigt werden kann. Ein solches Airbagmodul enthält regelmäßig eine topfförmige Aufnahme für einen zusammengefalteten Gassack sowie einen Auslösemechanismus, welcher z.B. aufgrund von Druckluft oder eines Explosionszündsatzes mit elektrischer Auslösevorrichtung einen aufblasbaren Airbag bereitstellt. Dieses Airbagmodul ist regelmäßig auf der dem Kraftfahrzeuginnenraum abgewandten Seite des Künststoffträgers angebracht, so dass bei Auslösung des Airbags dieser durch den Airbagdurchgangskanal kommend das Scharnierblatt (unter Aufreißen eines Teils des Kunststoffträgers) wegklappt und somit eine Entfaltung des Airbags im Kraftfahrzeuginnenraum zum Personenschutz ermöglicht.

Die Befestigung des Airbagmoduls am Befestigungsrahmen kann hierbei prinzipiell beliebig erfolgen, etwa durch Verschweißen, Verschrauben etc. Wichtig ist, dass hiermit das Airbagmodul praktisch an den Kunststoffträger "angehängt" werden kann, so dass keine Anbindung an einen Querträger eines Kraftfahrzeuges nötig ist. Durch den Entfall dieser Anbindung an den Querträger werden außerdem die ausgezeichneten Ergebnisse des erfindungsgemäßen Innenverkleidungsteils bei einem "Kopfaufschlagstest" erreicht. Dies liegt daran, dass bei einem Aufschlag auf das Innenverkleidungsteil dieses besser nachgeben kann und kein "harter Anschlag" bei einem Querträger gegeben ist. Hierbei stellt insbesondere der stabile, "geschlossene" Befestigungsrahmen jedoch sicher, dass es zu keiner unnötigen "Ausbauchung" des Kunststoffträgers bei der Airbagauslösung kommt, welcher eventuell wieder Sicherheitsrisiken mit sich bringen könnte.

Zusammenfassend kann also erklärt werden, dass durch das einteilige multifunktionale Airbagscharnierblech (Metallverstärkungsteil) folgende Anforderungen abgedeckt werden:
Preisvorteil gegenüber mehrteiligen Systemen, da es sich hier um ein einteiliges System handelt;
eine kontrollierte Scharnierung der Klappe (des Scharnierblattes);
eine Abschirmung zum Kunststoffträger und Absorbierung der hochdynamischen Kräfte beim Airbagschuss (dieser Effekt wirkt sich insbesondere bei niedrigen Temperaturen, etwa unter -35 Grad Celsius aus;
eine Anbindung des Airbagmoduls direkt an den Funktionsträger (Kunststoffträger) ist möglich, ohne eine Abstützung an einem zusätzlichen Tragrohr (Querträger;
die Randbedingungen für den "Kopfaufschlagstest" werden trotzdem erfüllt.

Erfindungsgemäß wird zusätzlich ermöglicht, dass der "Bimetalleffekt", welcher z.B. für ein Aufwölben des Kunststoffträgers bei starker Erhitzung verantwortlich ist, beseitigt wird.

Vorteilhafte Weiterbildungen der vorliegenden Erfindung werden in den abhängigen Ansprüchen beschrieben.

Eine besonders wichtige vorteilhafte Weiterbildung sieht vor, dass das Airbagmodul und/oder der Befestigungsrahmen an dem Kunststoffträger aufgehängt sind. Das heißt, dass auf der dem Kraftfahrzeuginnenraum abweisenden Seite des Kunststoffträgers das Airbagmodul "frei aufgehängt" ist, eine zusätzliche Kopplung an einem Querträger bzw. Tragrohr ist nicht nötig. Dies vereinfacht zum einen den Herstellungsaufwand. Es ist hier keine zusätzliche Kopplung vorzusehen, welche bei der Endmontage erfolgen müsste; es ist lediglich notwendig, bei der Endmontage die elektrische Anbindung des Airbagmoduls an einen Steuermechanismus zur Airbagauslösung vorzunehmen. Hiermit wird also ermöglicht, dass das Metallverstärkungsteil bzw. das Airbagmodul ausschließlich mit dem Kunststoffträger verbunden sind und keine weitere Ankopplung nötig ist. Es hat sich hierbei gezeigt, dass der Mindestabstand eines Airbagmoduls zu einem Tragrohr bzw. Querträger in zumindest einer Raumrichtung mindestens 40 mm betragen sollte.

Der Kunststoffträger kann je nach gewünschter Optik bzw. Haptik auf der zu dem Kraftfahrzeuginnenraum hinweisenden Seite mit Schaum und/oder einem Dekorfilm belegt sein. Das Dekor kann z.B. aus Leder oder einem Kunststoff wie PVC sein, auch kann eine entsprechende PVC-Schaumfolie mit z.B. 1,5 mm Dicke aufgebracht sein, um auf kostengünstige Weise eine angenehme Haptik und eine gute Optik zu erzielen, hierzu ist z.B. die Kaschierung mit einer PVC-Schaum-Folie Nr. 34 Dicke 2,5 mm Bayblend T85 möglich (dies sind Kunststoffkomponenten ABS/PC).

Der Kunststoffträger kann vorzugsweise auch mehrschichtig ausgeführt sein. Hierzu weist der Kunststoffträger z.B. auf der zum Kraftfahrzeug-Innenraum hinweisenden Seite eine vorzugsweise durchgehende Schichtung von Schaum und/oder weiteren Dekorschichten auf. Hierunter kann der Kunststoffträger ein weiteres Teil aufweisen, welches primär der Stabilität dient. Dieses Teil besteht z.B. aus ABS/PC und ist 0,5 bis 3 mm, vorzugsweise 2 bis 3 mm, am besten 2,5 mm, stark (bei noch größeren Dicken ist die "Unsichtbarkeit" eingeschränkt). Hiermit wird gewährleistet, dass der Kunststoffträger selbsttragend ist.

Hierbei ist es aus optischen Gründen für die Kraftfahrzeuginsassen besonders vorteilhaft, wenn der oben beschriebene Kunststoffträger ein zum Kraftfahrzeuginnenraum hin orientiertes Oberteil sowie ein damit verbundenes darunter liegendes Unterteil mit Einfassungen zur Aufnahme des hintergreifenden Abschnitts aufweist, wobei die Einfassungen zum Fahrzeuginnenraum hin vom Oberteil verdeckt sind. Hier wird quasi gewährleistet, dass durch diese Einfassungen/ Vertiefungen im Unterteil eine feste Kopplung des Befestigungsrahmens an den Kunststoffträger ermöglicht wird, ohne dass die fahrzeuginnenraumseitige Optik leiden muss.

Es ist hierbei besonders vorteilhaft, dass die Brücke zwei auf der Unterseite des Unterteils des Kunststoffträgers herausstehende Stege zur Aufhängung eines Airbagmoduls aufweist. Das Airbagmodul kann an diese Stege z.B. angeschweißt oder angeschraubt werden.

Das Metallverstärkungsteil kann ein Metallblech mit einer Stärke von 0,5 bis 1,5 mm, vorzugsweise 0,7 bis 0,9 mm sein. Als Materialien kommt insbesondere zugfähiges Metallblech, z.B. "Dosenblech" (Material: Blech DX50) in Frage. Mit diesen Materialen für das Metallverstärkungsteil wird gewährleistet, dass eine ausreichende Stabilität der Überbrückung des Airbagdurchgangskanals einerseits gegeben ist und andererseits eine gesicherte Scharnierfunktion bei einem Airbagdurchtritt gegeben ist.

Eine besonders vorteilhafte Weiterbildung sieht vor, dass der Scharniersteg so gebogen ist, dass bei Auslösung des Airbags das Scharnierblatt zunächst in Richtung des Airbagdurchgangskanals bewegt wird und nach Herausbewegung des Scharnierblatts in den Kraftfahrzeuginnenraum dieses zur Freigabe des sich entfaltenden Airbags seitlich aufbiegt. Der Kunststoffträger sollte hierbei soweit aufgerissen werden, dass die Dekorschicht "abgekantet" wird, dann tritt der "Türeffekt" des Scharniers ein.

Bei einer bevorzugten Ausführungsform, bei welcher ein Kunststoffträger zum Innenraum hin eine "Dekorfläche" mit einer z.B. PVC-Schaumfolie und darunter einen aus Stabilitätsgründen härteren Kunststoff, z.B. ABS aufweist, ist es z.B. möglich, die Kopplung zwischen Scharnierblatt und Kunststoffträger nur im Bereich der Dekorfläche vorzusehen. Das heißt, dass der "stabilitätsbildende" Teil des Kunststoffträgers in diesem Bereich ausgespart ist und hier voll durch das Scharnierblatt überbrückt wird.

Prinzipiell ist die Erfindung für sämtliche Innenverkleidungsteile in Kraftfahrzeugen anwendbar, unabhängig davon, ob das eine Instrumententafel, eine Seitenverkleidung oder z.B. der Kopfraumbereich eines Kraftfahrzeuges ist.

Weitere vorteilhafte Weiterbildungen der vorliegenden Erfindung werden in den übrigen abhängigen Ansprüchen erläutert. Die Erfindung wird nun anhand mehrerer Figuren erläutert. Es zeigen:
- Figur 1: die Ansicht eines erfindungsgemäßen Innenverkleidungsteils vom Kraftfahrzeuginneren aus;
- Figur 2: Komponenten eines mehrteiligen Kunststoffträgers;
- Figur 3: die Komponenten nach Figur 2 in gefügter Form;
- Figur 4: ein Teil eines erfindungsgemäßen Kunststoffträgers mit einem erfindungsgemäßen Metallverstärkungsteil und einem erfindungsgemäßen Brückenteil;
- Figur 5: eine Ansicht eines erfindungsgemäßen Innenverkleidungsteils nach Figur 1 von der dem Kraftfahrzeuginnenraum abgewandten Seite aus gesehen; sowie
- Figur 6: einen Schnitt durch das Innenverkleidungsteil nach Figur 5 (mit angehängtem Airbagmodul) gemäß A-A;
- Figur 7: einen Schnitt durch das Innenverkleidungsteil nach Figur 5 (mit angehängtem Airbagmodul) gemäß B-B.

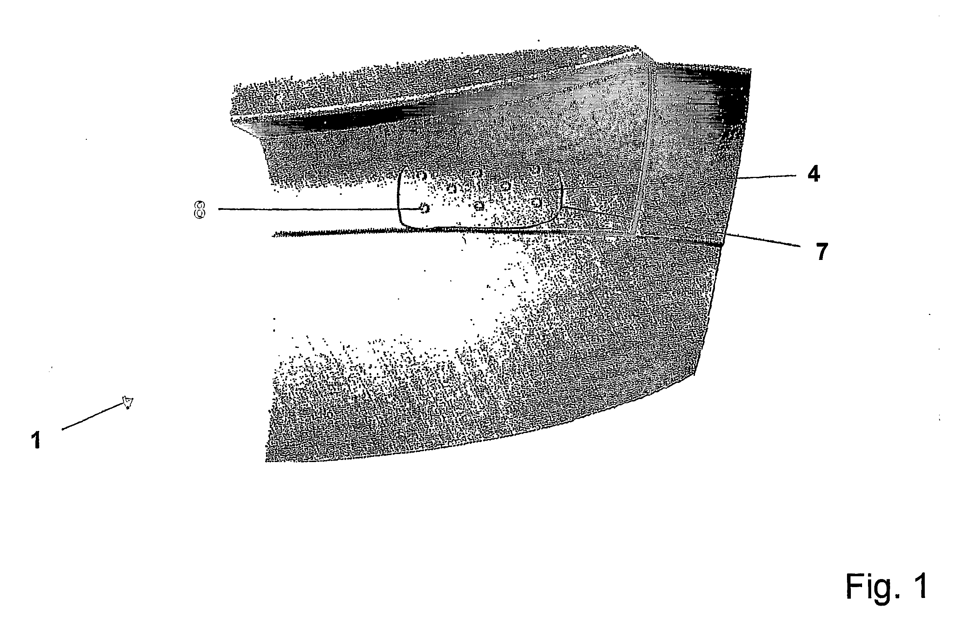

Figur 1 zeigt ein erfindungsgemäßes Innenverkleidungsteil 1 vom Innenraum eines Kraftfahrzeuges aus gesehen. Dieses Innenverkleidungsteil besitzt ein für die Fahrzeuginsassen normalerweise "unsichtbares" Airbagsystem. Allein zur Erläuterung sind daher in Figur 1 eine Sollbruchlinie 7 des Innenverkleidungsteils (welche z.B. rückseitig angebracht ist und somit unsichtbar) und Paarungen von Fixierelementen und Ausnehmungen vorgesehen, die in Figur 1 als insgesamt acht Dome (siehe Bezugsziffer "8") ausgeführt sind (die Sollbruchlinie 7 liegt überdeckend zum Schusskanal, damit durch unbefugten Druck auf die Oberfläche keine Verformung und damit Sichtbarkeit der Sollbruchstelle auftreten kann). Die Sollbruchlinie 7 bildet den äußeren Umriss eines Airbagdurchgangskanals 4 für den Durchtritt eines Airbags in den Kraftfahrzeuginnenraum. Das in Figur 1 gezeigte Innenverkleidungsteil ist Teil einer Instrumententafel eines modernen Kraftfahrzeuges.

Im folgenden wird der Aufbau eines Kunststoffträgers, welcher in dem Innenverkleidungsteil enthalten ist, erläutert.

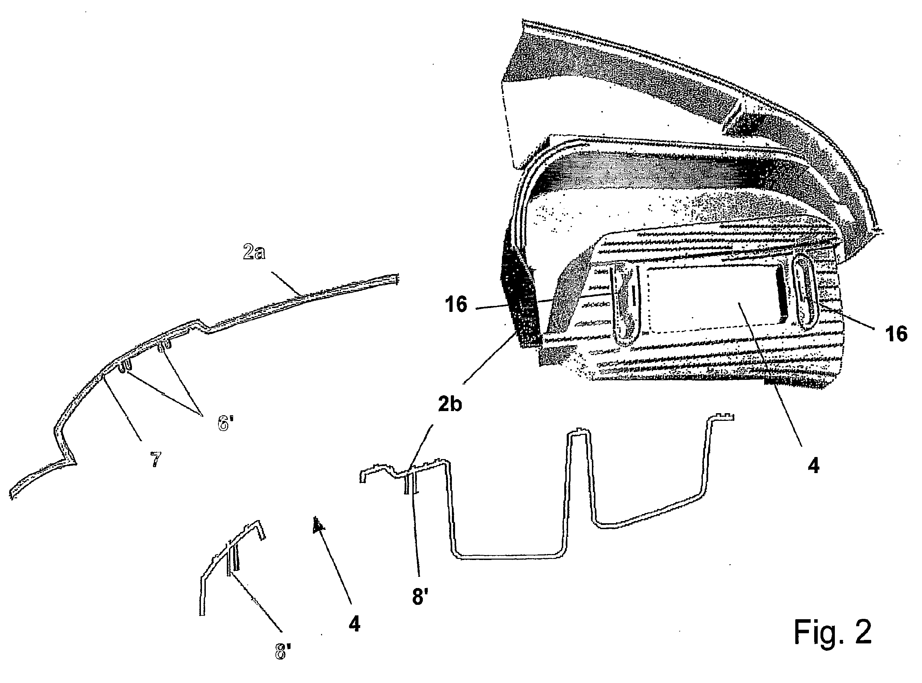

Figur 2 zeigt Elemente eines zweiteiligen Kunststoffträgers. Dieser weist zunächst ein unteres, primär der Stabilität und Verbindungssteifigkeit dienendes Unterteil 2b auf. Dieses Unterteil 2b ist einmal (unten) im Querschnitt dargestellt. Hierbei ist deutlich zu sehen, dass im Bereich des Airbagdurchgangskanals 4 ein Durchbruch gegeben ist. Dies ist auch nochmals bei der anderen Ansicht des Unterteils 2b zu sehen, welches oben rechts in Figur 2 gezeigt ist. Auch hier ist ein Airbagdurchgangskanal 4 gezeigt. Auf der Oberfläche in der Darstellung oben rechts des Unterteils 2b sind linienförmige Verläufe entlang der oberen Fläche dieses Unterteiles 2b zu sehen. Diese Teile dienen der Fixierung, z.B. mittels Vibrationsschweißung, eines auf das Unterteil 2b aufzubringenden Oberteils 2a, welches oben links in Figur 2 gezeigt ist. Das Unterteil 2b besteht aus einem stabilen Kunststoff, z.B. aus ABS/PC und ist z.B. 2,5 mm stark.

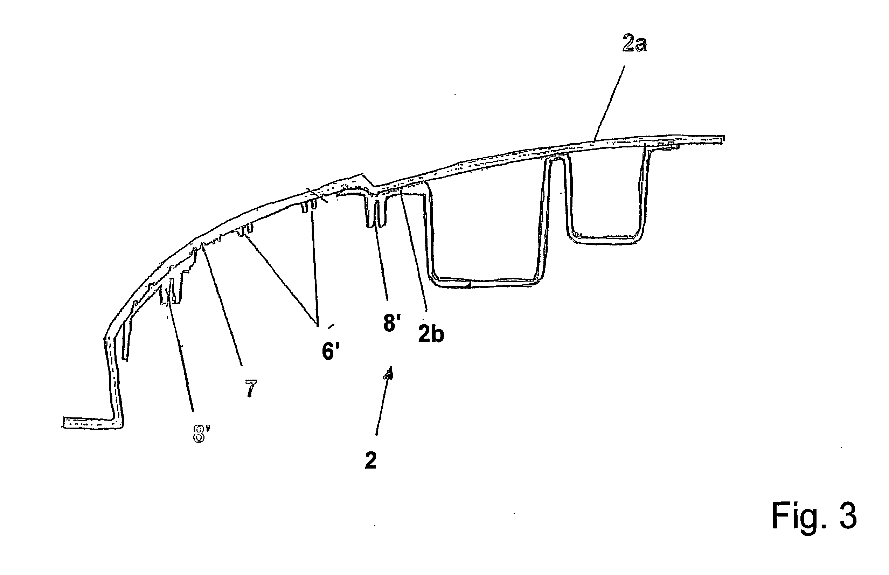

Auf das Unterteil 2b wird das Teil 2a gelegt. Hierbei handelt es sich um das mit einer PVC-Folie kaschierte Oberteil, welches zum Kraftfahrzeuginnenraum hin (also nach oben links hin in Figur. 2) eine genarbte oder glatte Folie aufweist, welche von einem Schaum unterfüttert ist. Selbstverständlich sind auch weitere Ausbildungen möglich, z.B. dass eine zusätzliche Dekorierung mit Leder etc. gegeben ist oder auch eine Ausschäumung, um eine noch dickere Schaumschicht herzustellen. Die Teile 2a und 2b werden so gefügt, dass sich der in Figur 3 gezeigte Kunststoffträger 2 ergibt. Hierbei ist bereits jetzt darauf hinzuweisen, dass die in Figur 1 angedeutete Sollbruchlinie 7 sich im Randbereich des Airbagdurchgangskanals 4 befindet und dass "Domrohlinge" 6' vorgesehen sind, welche nach der späteren Verschmelzung ihrer Enden Fixierelemente zur Fixierung des Scharnierblattes bilden werden. Außerdem sind Schraubdome 8' zur Befestigung eines erfindungsgemäßen Befestigungsrahmens eines Metallverstärkungsteils vorgesehen. Die Befestigung erfolgt hier vorteilhafterweise durch Verschmelzen der Enden zum hintergreifenden Erfassen des Befestigungsrahmens (für Domrohlinge 6'), für Schraubdome 8' durch hintergreifende Verschraubung mit z.B. einer selbstschneidenden Schraube.

Der in Figur 3 gezeigte Kunststoffträger 2 weist eine Form auf, welche beliebige konstruktive Ansprüche erfüllt. Die in Figur 3 gezeigte Ausführungsform stellt eine Instrumententafel dar. Hierzu können insbesondere in dem Unterteil 2b zusätzliche Kanäle, etwa zur Luftführung, vorgesehen werden.

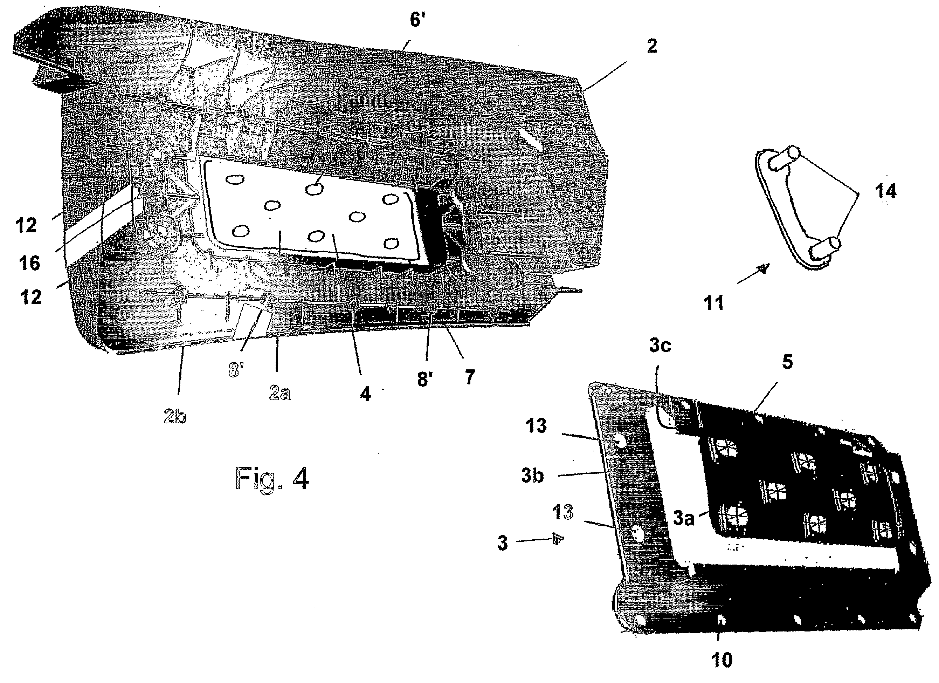

Figur 4 zeigt nochmals einen Ausschnitt des Kunststoffträgers 2 von seiner "Rückseite", also von der im Einbauzustand vom Kraftfahrzeuginnenraum abweisenden Seite aus. Hier ist zu sehen, dass der Airbagdurchgangskanal 4 durch das Teil 2a verschlossen ist. Außerdem sind die "Domrohlinge" 6' zu sehen. Auf diese Domrohlinge wird ein Scharnierblatt 3a mit Ausnehmungen 5 aufgesetzt, wie es in Figur 4 zu sehen ist. Die Ausnehmungen 5 des Scharnierblattes 3a sind korrespondierend in der Form zu den Domrohlingen 6'. Das Scharnierblatt 3a gehört zu einem Metallverstärkungsteil 3, welches rahmenförmig ist mit dem zentral angeordneten Scharnierblatt 3a. Das Metallverstärkungsteil weist außerdem in seinem Randbereich 3b einen erfindungsgemäßen Befestigungsrahmen für ein Airbagmodul auf, welche einteilig mit dem Scharnierblatt 3a über einen Scharniersteg 3c verbunden ist. In diesem Randbereich sind Löcher 10 vorgesehen, welche der Fixierung des Randbereichs an der Rückseite des Kunststoffträgers 2 in entsprechen Schraubdomen 8' (welche dann zur Befestigung hintergreifend verschmolzen werden oder mit Schrauben versehen werden) dienen. Bei dem Metallverstärkungsteil handelt es sich um ein tiefgezogenes Metallblechteil (Dosenblech), welches eine durchgehende Stärke von 0,8 mm aufweist. Das Metallverstärkungsteil (bzw. das Scharnierblatt) werden auf der einem Kraftfahrzeug-Innenraum abgewandten Seite des Kunststoffträgers 2 angebracht, wobei zumindest das Oberteil 2a des Kunststoffträgers den Airbagdurchgangskanal 4 überdeckt.

Es ist darauf zu achten, dass das Metallverstärkungsteil 3 sowie der Kunststoffträger 2 so geformt sind, dass das Scharnierblatt 3a in der verbundenen Stellung von Metallverstärkungsteil 3 und Kunststoffträger 2 eine flächige Unterstützung des Abschnittes 2a bietet, welcher den Airbagdurchgangskanal 4 überdeckt. Nur hierdurch kommt es dann zu dem gewünschten unsichtbaren Erscheinungsbild, da das Scharnierblatt 3a sich somit der Gesamtkontur des Innenverkleidungsteils 1 anschließt.

In Figur 4 ist außerdem oben rechts eine Metallbrücke 11 gezeigt, welche als ein Flachstück mit angeschweißten Gewindebolzen 14 zur Befestigung eines Airbagmoduls ausgebildet ist. Diese Brücke wird mit den Stegen zu dem Kunststoffträger (in diesem Falle dem unteren Teil 2b) in Vertiefungen 16 (siehe auch Figur 2 oben rechts) gesteckt, so dass die Stege 14 durch Löcher 12 (siehe Figur 4 oben links) das untere Teil durchdringen und auf der dem Kraftfahrzeuginnenraum abgewandten Seite des Kunststoffträgers herausstehen.

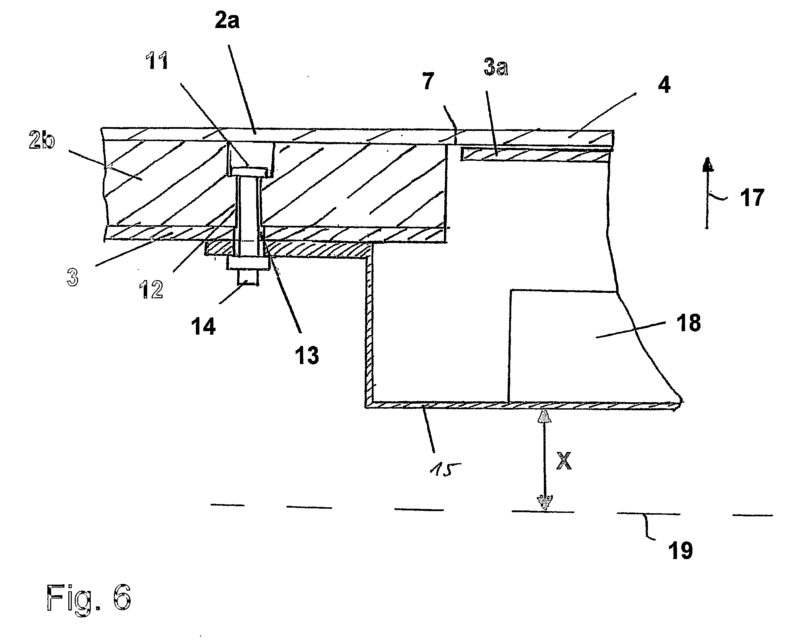

Insgesamt sind zur Fixierung des Airbagmoduls zwei Brücken 11 vorgesehen, welche in entsprechende komplementäre Einfassungen bzw. Ausnehmungen 16 (siehe Figuren 2 und 4) gesteckt werden zur späteren Fixierung des Befestigungsrahmens und des Airbagmoduls am Kunststoffträger (hierauf wird in Figur 6 nochmals näher eingegangen). Vorliegend ist damit also ein Kunststoffträger 2 mit einem zum Kraftfahrzeuginnenraum hinorientiertem Oberteil 2a sowie einem damit verbundenen Unterteil 2b mit Einfassungen 16 zur Aufnahme des hintergreifenden Abschnitts der Brücke vorgesehen, wobei die Einfassungen zum Fahrzeuginnenraum hin vom Oberteil 2a verdeckt sind.

In Figur 4 oben links sind die Brücken 11 also bereits in dem Kunststoffträger 2, also in den Ausnehmungen 16, verankert. Die Gewindebolzen bzw. Stege 14 weisen hier aus der Blattebene heraus aus den Löchern 12, welche hierzu im unteren Teil 2b vorgesehen sind.

Nachfolgend zu dem in Figur 4 gezeigten Zustand erfolgt eine Verschmelzung der Domrohlinge 6' sowie eine Verschraubung mit den Schraubdome 8'. Durch,die Verschraubung der Schraubdome 8' wird ein Hintergriff der Löcher 10 des Befestigungsrahmens 3b erreicht, so dass dieser fest mit dem unteren Teil 2b verbunden ist. Durch die Verschmelzung der Domrohlinge 6' findet eine Anbindung des Scharnierblattes 3a an das obere Teil 2a statt. Die Herstellung des Hintergriffs kann hierbei durch Ultraschall-Schweißen oder auch durch Wärmeverschmelzen stattfinden. Selbstverständlich ist es auch immer möglich, hier externe Bauteile, etwa Schrauben aus Metall oder Kunststoff, zur Befestigung zu verwenden.

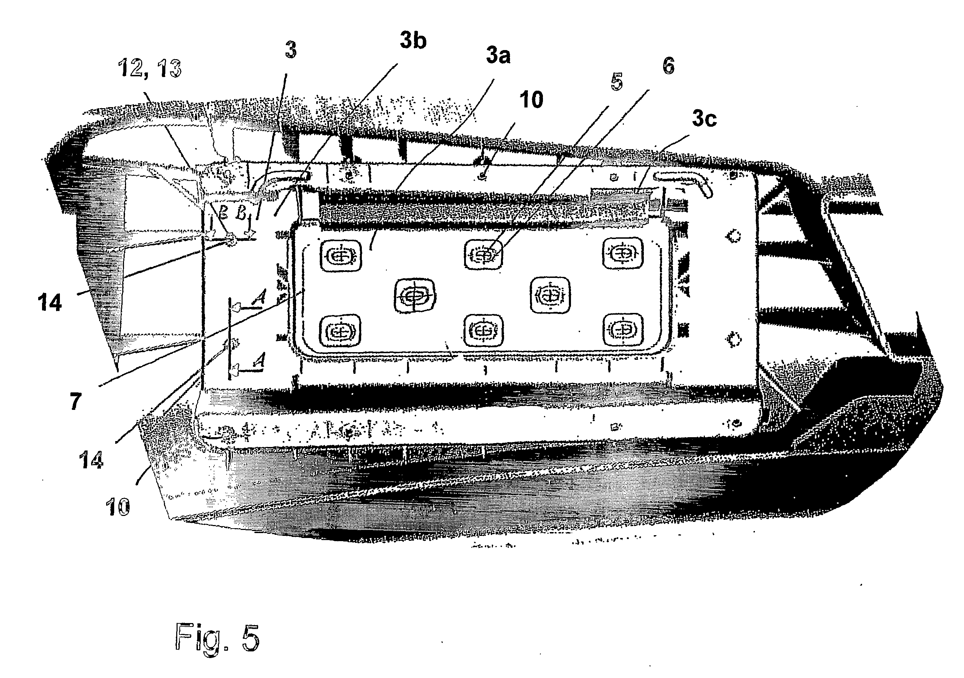

Außerdem ist in Figur 5 gut erkennbar, dass die Stege/Gewindebolzen 14 der Brücke 11, welche Löcher 12 des Kunststoffträgers sowie fluchtende Löcher 13 des Metallverstärkungsteils 3 durchdringen, aus der Blattebene herausragen. Diese Stege 14 dienen der Befestigung eines Airbagmoduls 15, hierauf wird in Figur 6 nochmals näher eingegangen.

Außerdem ist in Figur 5 ein Scharniersteg 3c gut zu erkennen, welcher zwischen dem Befestigungsrahmen 3b sowie dem Scharnierblatt 3a angeordnet ist. Es ist hier zu sehen, dass dieser Scharniersteg eine "Stufung" aufweist. Hiermit wird erreicht, dass der Scharniersteg so gebogen ist, dass bei Auslösung des Airbags das Scharnierblatt 3a zunächst in Richtung (Bezugszeichen 17 in Figur 3) des Airbagdurchgangskanals 4 bewegt wird und nach Herausbewegung des Scharnierblatts in den Kraftfahrzeuginnenraum dieses zur Freigabe des sich entfaltenden Airbags seitlich aufbiegt.

Figur 6 zeigt einen Schnitt gemäß A-A nach Figur 5. Hier ist im Schnitt nochmals das Kunststoffträgerteil 2 gezeigt, welches aus einem oberen Teil 2a und einem unteren Teil 2b besteht. In der Ausnehmung bzw. Einfassung 16 ist eine (von zwei) Brücken 11 angeordnet mit Stegen/Gewindebolzen 14, welche ein Loch 12 des unteren Teils 2b durchdringt. An dem unteren Teil 2b ist außerdem das Metallverstärkungsteil 3 über hier nicht dargestellte Verschweißungen und Verschraubungen befestigt. Die Löcher 13 des Metallverstärkungsteils 3 sind fluchtend zu den Löchern 12 des unteren Teils 2b angeordnet, der Steg 14 der Brücke durchläuft auch das in Figur 6 gezeigte Loch 13. Der Steg 14 steht über das Metallverstärkungsteil 3 auf der dem Kraftfahrzeuginnenraum abgewandten Seite des Kunststoffträgers heraus. An diesem Abschnitt ist ein Airbagmodul 15 mit einem Airbag 18 befestigt. Das Airbagmodul weist eine topfförmige äußere Gestalt mit einem herausstehenden Rand auf. In diesem Rand sind Löcher vorgesehen zum Durchführen des/der Stege 14 und zur hintergreifenden Befestigung des Airbagmoduls 15 am Kunststoffträger 2 bzw. dem Befestigungsrahmen 3b des Metallverstärkungsteils 3. Die Befestigung kann hierbei durch eine Verschweißung oder eine Verschraubung, aber auch durch Vernietung, Verklebung oder andere gängige Fügeverfahren erfolgen. Selbstverständlich ist es jedoch auch möglich, dass das Airbagmodul 15 in seinem Randbereich nicht direkt mit dem Steg 14 in Berührung ist. Stattdessen ist es z.B. auch möglich, dass die Brücke 11 lediglich der besseren Fixierung des Metallverstärkungsteiles 3 dient und das Airbagmodul an einer anderen Stelle als an dem Steg 14 mit dem Metallverstärkungsteil 3 verbunden ist. In diesem Fall ist eine hintergreifende Befestigung des Steges 14 direkt an dem Metallverstärkungsteil 3 bzw. dem Befestigungsrahmen 3a vorzusehen.

In Figur 6 ist außerdem zu sehen, wie innerhalb des Airbagmoduls 15 ein nicht aufgeblasener Airbag 18 angebracht ist, welcher bei Auslösung durch den Airbagdurchgangskanal 4 austritt, wobei das Scharnierblatt 3a zunächst in Richtung 17 bewegt wird, wobei die Sollbruchlinie reißt.

Bei diesem Auslösen des Airbags kommt es zu einer Rückstoßkraft (allerdings nicht zu einem Abtauchen des Airbagmoduls!) entgegen der Richtung 17. Aufgrund der erfindungsgemäßen Befestigung des Airbagmoduls ist es möglich, das Airbagmodul 15 lediglich am Befestigungsrahmen 3b / dem Kunststoffträger 2 "aufzuhängen". Es ist nicht nötig, eine zusätzliche Fixierung an einem Querträger (Bezugszeichen 19 in Figur 6) vorzusehen. Hierdurch ergibt sich außerdem der Vorteil, dass bei dem "Aufschlag" eines Fahrzeuginsassen auf das Innenverkleidungsteil (entgegen Richtung 17) ein ausreichende Elastizität des Innenverkleidungsteils gegeben ist, da zwischen dem Querträger 19 und dem Airbagmodul 15 ein Mindestabstand von 40 mm in der in Figur 6 gezeigten Raumrichtung gegeben ist.

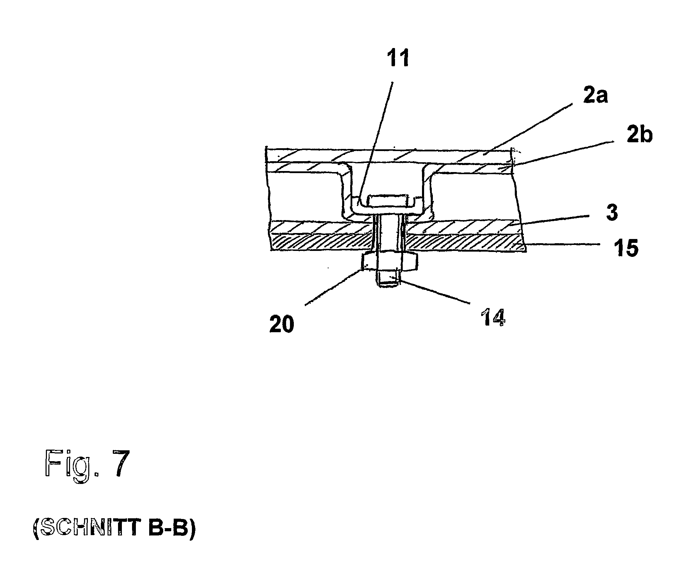

Während Figur 6 zunächst allgemein den Schichtaufbau des Innenverkleidungsteils im Schnitt A-A gezeigt hat, wird in Figur 7 mit Bezug auf den Schnitt B-B eine spezielle Art des Schichtaufbaus, welche im Großserienfertigungsbereich günstig ist, gezeigt. Es versteht sich von selbst, dass der hier in Figur 7 gezeigte Aufbau einheitlich für sämtliche Stege 14 eines erfindungsgemäßen Innenverkleidungsteils 1 gelten würde.

In Figur 7 ist wiederum ein Oberteil 2a mit einem darunter liegenden Unterteil 2b gezeigt. Die Blechbrücke ist hier ein z.B. tiefgezogener Blechstreifen, welcher zwei Bohrungen enthält, durch welche Stege in Form von Gewindebolzen 14 hintergreifend eingeschoben sind. Diese Gewindebolzen können zusätzlich an ihrer Kopfseite mit der Blechbrücke 11 z.B. punktverschweißt sein. Die Blechbrücke 11 ist in einer Ausnehmung versenkt, so dass sie von der Oberseite 2a, d.h. KfZ-innenraumseitig, nicht sichtbar ist. Durch Kontern mit einer Mutter 20, welche auf das Gewinde des Gewindebolzens 14 aufgeschraubt ist, wird das Metallverstärkungsteil 3 sowie das Airbagmodul 15 fest fixiert.

Die vorliegende Erfindung weist einige besondere Vorteile auf, welche im folgenden nochmals kurz betont werden sollten.

So ist es möglich, ein Airbagmodul allein an einem Kunststoffträger, welcher z.B. zu einer Instrumententafel eines Kraftfahrzeugs gehört, aufzuhängen. Die Befestigung des Airbagmoduls erfolgt also ausschließlich an dem Befestigungsrahmen des erfindungsgemäßen Metallverstärkungsteils bzw. dem damit verbundenem Innenverkleidungsteil. So wird es also möglich, allein an dem Innenverkleidungsteil selbst das gesamte Airbagmodul vorzusehen. Also es wird praktisch an der Rückseite beispielsweise einer Instrumententafel befestigt. Hierdurch ergibt sich montagemäßig eine Erleichterung, da eine zusätzliche Anbindung des Airbagmoduls zu dessen Abstützung (etwa an einem Querträger oder einem Türinnenblech etc.) nicht notwendig ist. Die Stabilität des Metallverstärkungsrahmens, welcher an dem Innenverkleidungsteil angebunden ist, ist hierzu ausreichend. Hierdurch wird einerseits ein starker Halt des Airbagmoduls an dem Metallverstärkungsteil erreicht. Trotzdem ist allerdings noch eine gewisse Nachgiebigkeit der Instrumententafel erhalten, welche insbesondere beim "Kopfaufschlagtest" Vorteile bringt. Bei einer Befestigung des Airbagmoduls an tragenden (Metall-)Teilen oder z.B. einem Querträger wäre die gewünschte Nachgiebigkeit nicht gegeben.

Die besonders gute Anbindung des Airbagmoduls an das Metallverstärkungsteil wird insbesondere durch eine hintergreifende Brücke gewährleistet, welche beispielsweise mindestens zwei Befestigungsbolzen bzw. Befestigungsschrauben enthält und eine Verbindung zwischen diesen darstellt. Auf diese Weise kann der Träger, welcher beispielsweise lediglich aus Kunststoff besteht, auf relativ breiter Fläche hintergriffen werden, so dass ein sehr stabiles Gefüge zwischen Metallverstärkungsteil, Trägerteil (Kunststoffträger) sowie Airbagmodul entsteht, welches bei dem Hintergriff durch einzelne einfache Kopfschrauben nicht möglich wäre.

Eine weitere Vorteilhaftigkeit der Erfindung ergibt sich schließlich durch die mögliche Gestaltung des Scharniersteges. Dieser kann beispielsweise so gebogen werden, dass bei Auslösung des Airbags das Scharnierblatt zunächst in Richtung des Airbagdurchgangskanals bewegt wird und nach Herausbewegung des Scharnierblatts in den Kraftfahrzeuginnenraum dieses zur Freigabe des sich entfaltenden Airbags seitlich aufbiegt.

So ist es beispielsweise möglich, das Scharnier mit einer bestimmten dreidimensionalen Formgebung zu versehen. So kann der Scharniersteg beispielsweise im Querschnitt eine Stufung bzw. Treppung aufweisen. Dies können beispielsweise ein oder auch zwei Stufen sein, welche von dem Rand des Befestigungsrahmens hin bis zu dem Scharnierblatt sich im Querschnitt als Stufung zeigen. Es ist hierbei auch möglich, dass die einzelnen Stufen dieser Stufung über den Längsverlauf des Scharniersteges hinweg eine unterschiedliche Höhe aufweisen, um beispielsweise Neigungen der Instrumententafel entsprechend ausgleichen zu können.

## Patentansprüche

1. Innenverkleidungsteil (1), insbesondere für Kraftfahrzeuge, welches einen Kunststoffträger (2) sowie ein damit verbundenes, mit einem Scharnierblatt (3a) zur zumindest bereichsweisen Überbrückung eines Airbagdurchgangskanals (4) versehenes, Metallverstärkungsteil (3) aufweist, wobei das Metallverstärkungsteil (3) einen Befestigungsrahmen (3b) für ein Airbagmodul (15) aufweist, welcher einteilig mit dem Scharnierblatt (3a) über einen Scharniersteg (3c) verbunden ist, **dadurch gekennzeichnet, dass** mindestens eine, den Kunststoffträger (2) zumindest bereichsweise hintergreifende Brücke (11) vorgesehen ist zur Fixierung des Befestigungsrahmens (3b) am Kunststoffträger (2) und das Scharnierblatt (3a) auf der einem Kraftfahrzeuginnenraum abgewandten Seite des Kunststoffträgers (2) angebracht ist.

2. Innenverkleidungsteil nach Anspruch 1, **dadurch gekennzeichnet, dass** der Befestigungsrahmen (3b) und/oder ein Airbagmodul (15) an dem Kunststoffträger (12) aufgehängt sind.

3. Innenverkleidungsteil nach einem der vorhergehenden Ansprüche, **dadurch gekennzeichnet, dass** das Metallverstärkungsteil (3) ausschließlich mit dem Kunststoffträger (2) verbunden ist.

4. Innenverkleidungsteil nach einem der vorhergehenden Ansprüche, **dadurch gekennzeichnet, dass** der Kunststoffträger (2) ein zum Kraftfahrzeuginnenraum hin orientiertes Oberteil (2a) sowie ein damit verbundenes darunter liegendes Unterteil (2b) mit Einfassungen (16) zur Aufnahme des hintergreifenden Abschnitts der Brücke (11) aufweist, wobei die Einfassungen zum Fahrzeuginnenraum hin vom Oberteil verdeckt sind.

5. Innenverkleidungsteil nach einem der Ansprüche 1 oder 4, **dadurch gekennzeichnet, dass** die Brücke (11) aus Metallblech oder Kunststoff ist.

6. Innenverkleidungsteil nach einem der Ansprüche 1, 4 oder 5, **dadurch gekennzeichnet, dass** die Brücke (11) zwei auf der Unterseite des Unterteils herausstehende Stege (14) zur Aufhängung eines Airbagmoduls (15) aufweist.

7. Innenverkleidungsteil nach einem der vorhergehenden Ansprüche, **dadurch gekennzeichnet, dass** der Befestigungsrahmen (3b) am Kunststoffträger (2) punktuell befestigt ist.

8. Innenverkleidungsteil nach einem der vorhergehenden Ansprüche, **dadurch gekennzeichnet, dass** der Scharniersteg (3c) eine derartige Stufung aufweist, dass bei Auslösung des Airbags (18) das Scharnierblatt (3a) zunächst in Richtung (17) des Airbagdurchgangskanals (4) bewegt wird und nach Herausbewegung des Scharnierblattes in den Kraftfahrzeuginnenraum dieses zur Freigabe des sich entfaltenden Airbags seitlich aufbiegt.

9. Innenverkleidungsteil nach einem der vorhergehenden Ansprüche, **dadurch gekennzeichnet, dass** der Kunststoffträger (2) den Airbagdurchgangskanal (4) überdeckt.

10. Innenverkleidungsteil nach Anspruch 9, **dadurch gekennzeichnet, dass** der Kunststoffträger (2) um den Airbagdurchgangskanal (4) herum eine Sollbruchlinie (7) aufweist.

11. Innenverkleidungsteil nach einem Ansprüche 1, 9 oder 10, **dadurch gekennzeichnet, dass** der Kunststoffträger (2) auf der zu einem Kraftfahrzeuginnenraum hinweisenden Seite Schaum und/oder weitere Dekorschichten aufweist.

12. Innenverkleidungsteil nach einem der vorhergehenden Ansprüche, **dadurch gekennzeichnet, dass** der Kunststoffträger (2) zumindest teilweise aus ABS ist und dort 0,5 - 3 mm, vorzugsweise 2 - 3 mm, besonders vorzugsweise 2,5 mm, stark ist.

13. Innenverkleidungsteil nach einem der vorhergehenden Ansprüche, **dadurch gekennzeichnet, dass** das Metallverstärkungsteil (3) 0,5 - 1,5 mm, vorzugsweise 0,7 - 0,9 mm stark ist.

14. Innenverkleidungsteil nach einem der vorhergehenden Ansprüche, **dadurch gekennzeichnet, dass** dies eine Instrumententafel (1), eine Seitenverkleidung oder dergleichen eines Kraftfahrzeuges ist.

15. Kraftfahrzeug mit Innenverkleidungsteil nach einem der vorhergehenden Ansprüche, **dadurch gekennzeichnet, dass** das Kraftfahrzeug einen Querträger sowie ein Innenverkleidungsteil umfasst und der Abstand (x) des Airbagmoduls (15) in Richtung des Airbagdurchgangskanals (4) zu den angrenzenden Bauteilen wie Querträger (19) oder dergleichen mindestens 40 mm beträgt.

## Claims

1. Inner trim part (1), particularly for vehicles, which has a plastic carrier (2) as well as a metal reinforcement part (3) equipped with a hinge plate (3a) and connected with the plastic carrier in order to bridge at least partly an airbag passage channel (4), with the metal reinforcement part (3) having a fixation frame (3b) for an airbag module (15) which is connected with the hinge plate (3a) to form one piece via a hinge bar (3c), **characterised in that** at least one bridge (11) that engages the plastic carrier (2) is at least partly intended for the fixation of the fixation frame (3b) to the plastic carrier (2) and that the hinge plate (3a) is fixed on a side of the plastic carrier (2) that is opposite the vehicle interior.

2. Inner trim part according to claim 1, **characterised in that** the fixation frame (3b) and/or the airbag module (15) are suspended on the plastic carrier (12).

3. Inner trim part according to one of the previous claims, **characterised in that** the metal reinforcement part (3) is exclusively fixed to the plastic carrier (2).

4. Inner trim part according to one of the previous claims, **characterised in that** the plastic carrier (2) comprises an upper part (2a) oriented towards the vehicle interior as well as a lower part (2b) located below and connected with it, including a bezel (16) for the uptake of the engaging part of the bridge (11), with the bezel being covered by the upper part towards the vehicle interior.

5. Inner trim part according to claim 1 or 4, **characterised in that** the bridge (11) is made of sheet metal or plastic.

6. Inner trim part according to one of the claims 1, 4 or 5, **characterised in that** the bridge (11) has two bars (14) that stick out on the lower side of the lower part for the suspension of an airbag module (15).

7. Inner trim part according to one of the previous claims, **characterised in that** the fixation frame (3b) is in places fixed to the plastic carrier (2).

8. Inner trim part according to one of the previous claims, **characterised in that** the hinge bar (3c) is stepped in a way that when the airbag ignites (18), the hinge plate (3a) is first moved towards (17) the airbag passage channel (4) and then bends up laterally after that the hinge plate has moved into the vehicle interior in order to release the deploying airbag.

9. Inner trim part according to one of the previous claims, **characterised in that** the plastic carrier (2) covers the airbag passage channel (4).

10. Inner trim part according to claim 9, **characterised in that** the plastic carrier (2) has got a rated break line (7) around the airbag passage channel (4).

11. Inner trim part according to one of the claims 1, 9 or 10, **characterised in that** the plastic carrier (2) has foam and/or further decor layers on the side that faces the vehicle interior.

12. Inner trim part according to one of the previous claims, **characterised in that** the plastic carrier (2) is at least partly made of ABS and is 0.5 to 3 mm thick there, preferably 2 to 3 mm, particularly preferably 2.5 mm.

13. Inner trim part according to one of the previous claims, **characterised in that** the metal reinforcement part (3) is 0.5 to 1.5 mm thick, preferably 0.7 to 0.9 mm.

14. Inner trim part according to one of the previous claims, **characterised in that** this is an instrument panel (1), a side panel or suchlike of a vehicle.

15. Inner trim part according to one of the previous claims, **characterised in that** the vehicle has a cross beam and an inner trim part and that the distance (x) of the airbag module (15) towards the airbag passage channel (4) to the adjoining parts such as cross beam (19) or suchlike is at least 40 mm.

## Revendications

1. Pièce de revêtement intérieur (1), particulièrement pour un véhicule automobile qui comprend une potence plastifiée (2) ainsi qu'un élément de renforcement métallique (3) qui est muni d'une lame de charnière (3a) et qui est connecté avec la potence plastifiée afin de ponter au moins partiellement un canal de passage d'airbag (4), l'élément de renforcement métallique (3) ayant une huissière de fixation (3b) pour un module-airbag (15) qui est connectée une-pièce avec la lame de charnière (3a) par une traverse de charnière (3c), **caractérisée en ce qu'**au moins un pont (11) qui passe au moins partiellement derrière la potence plastifiée (2) est prévue pour la fixation de la huissière de fixation (3b) à la potence plastifiée et que la lame de charnière (3a) est fixée à un côté de la potence plastifiée qui est opposé l'intérieur d'un véhicule automobile.

2. Pièce de revêtement intérieur selon la revendication 1, **caractérisé en ce que** la huissière de fixation (3b) et/ou le module-airbag (15) sont suspendus à la potence plastifiée (12).

3. Pièce de revêtement intérieur selon une des revendications préalables, **caractérisé en ce que** l'élément de renforcement métallique (3) est exclusivement connecté avec la potence plastifiée (2).

4. Pièce de revêtement intérieur selon une des revendications préalables, **caractérisé en ce que** la potence plastifiée (2) a une partie supérieure (2a) qui est orientée vers l'intérieur du véhicule automobile ainsi qu'une partie inférieure (2b) qui se trouve au-dessous et qui est connectée avec celle-là avec une bordure (16) pour le récepteur de la partie passe derrière le pont (11), la bordure étant couverte vers l'intérieur du véhicule automobile par la partie supérieure.

5. Pièce de revêtement intérieur selon une des revendications 1 à 4, **caractérisé en ce que** le pont (11) est fabriqué de tôle métallique ou de matériel plastifié.

6. Pièce de revêtement intérieur selon une des revendications 1, 4 ou 5, **caractérisé en ce que** le pont (11) a deux traverses (14) pour la suspension du module-airbag (15) qui dépassent du côté inférieur de la pièce inférieure.

7. Pièce de revêtement intérieur selon une des revendications préalables, **caractérisé en ce que** l'huissière de fixation (3b) est par endroits fixée à la potence plastifiée

8. Pièce de revêtement intérieur selon une des revendications préalables, **caractérisé en ce que** la traverse de charnière (3c) a une gradation de façon que la lame de charnière (3a) se déplace premièrement vers (17) le canal de passage d'airbag (4) et après le mouvement de la lame de charnière à l'intérieur du véhicule automobile s'ouvre latéralement afin de débloquer l'airbag déployant quand l'airbag (18) se déclenche,

9. Pièce de revêtement intérieur selon une des revendications préalables, **caractérisé en ce que** la potence plastifiée (2) couvre le canal de passage d'airbag (4).

10. Pièce de revêtement intérieur selon la revendication 9, **caractérisé en ce que** la potence plastifiée (2) a une ligne destinée à la rupture (7) autour du canal de passage d'airbag (4).

11. Pièce de revêtement intérieur selon une des revendications 1, 9 ou 10, **caractérisé en ce que** la potence plastifiée (2) a mousse et/ou autres couches de décor au côté qui est orienté vers l'intérieur du véhicule automobile.

12. Pièce de revêtement intérieur selon une des revendications préalables, **caractérisé en ce que** la potence plastifiée (2) consiste au moins partiellement de ABS et y est 0,5 à 3 mm, de préférence 2 à 3 mm, particulièrement de préférence 2,5 mm fort.

13. Pièce de revêtement intérieur selon une des revendications préalables, **caractérisé en ce que** l'élément de renforcement métallique (3) est 0,5 à 1,5 mm, de préférence 0,7 à 0,9 mm fort.

14. Pièce de revêtement intérieur selon une des revendications préalables, **caractérisé en ce que** c'est une planche de bord (1), un élément de revêtement latéral ou d'autres choses semblables d'un véhicule automobile.

15. Véhicule automobile avec une pièce de revêtement intérieur selon une des revendications préalables, **caractérisé en ce que** le véhicule automobile comprend un profilé transversal ainsi qu'une pièce de revêtement intérieur et que la distance (x) du module-airbag (15) vers le canal de passage d'airbag (4) aux éléments adjacents comme profilé transversal (19) ou d'autres choses semblables est au moins 40 mm.
